# EUROPÄISCHE PATENTSCHRIFT

(11) **EP 1 817 129 B1**
(45) Veröffentlichungstag und Bekanntmachung des Hinweises auf die Patenterteilung: **15.05.2013**
(21) Anmeldenummer: 05850213.9
(22) Anmeldetag: 25.11.2005
(51) Int. Cl.: B23Q 7/00, B23C 3/14, B23P 13/02, B23C 3/00, B23C 5/08

(54) **Hochleistungsfräsanlage und Verfahren zur Herstellung von metallischen Führungselementen**
High-speed milling cutter system and method for producing metallic guide elements
Système de fraisage à coupe rapide et procède de production d'éléments de guidage métalliques

(30) Priorität: 29.11.2004 DE 102004057655; 20.04.2005 DE 102005018549
(43) Veröffentlichungstag der Anmeldung: 15.08.2007
(73) Patentinhaber: Hoesch Schwerter Profile GmbH, 58239 Schwerte (DE)
(72) Erfinder: PLEUGEL, Lothar, 58640 Iserlohn (DE); STREGE, Ingo, 58644 Iserlohn (DE); FRIGGE, Olaf, 44309 Dortmund (DE); BRETZKE, Dietmar, 58239 Schwerte (DE)
(74) Vertreter: Christophersen, Ulrich Rudolf
(86) Internationale Anmeldenummer: PCT/EP2005/012609
(87) Internationale Veröffentlichungsnummer: WO 2006/056456

(56) Entgegenhaltungen:
- EP-A- 0 572 846
- EP-A- 1 284 170
- EP-A1- 1 450 986
- DE-A1- 4 111 596
- DE-B1- 2 228 991
- FR-A1- 2 763 873
- US-A- 4 796 341
- US-A- 6 164 351
- US-B1- 6 319 104

## Beschreibung

Die Erfindung betrifft ein Verfahren zur Herstellung als metallische Führungselemente dienender Profilstäbe nach dem Oberbegriff des Patentanspruchs 1, und eine Hochleistungsfräsanlage zur Durchführung dieses Verfahrens nach dem Oberbegriff des Patentanspruchs 10.

Derartige Verfahren bzw. Vorrichtungen sind aus der DE 196 21 536 C2 und aus der US 4,796,341 bekannt.

Ganz allgemein ist bei Verfahren und Vorrichtungen zur Herstellung von Stahlprofilstäben für Linearführungselemente mittels einer Kombination von Warmformgebung und anschließender Kaltformgebung zwischen den Fertigungsstufen Warmformgebung und Kaltformgebung eine spanabhebende, formgebende Bearbeitungsstufe vorgesehen. Dadurch entfallen kosten- und zeitaufwendige Produktionsschritte.

Die im Wesentlichen U- oder H-förmigen Führungselemente für den Staplerbau werden im Falle weit ausfahrender Staplergerüste (hohe Hubhöhen) nach dem Warmwalzen zur Einengung der Kammermesstoleranz (Funktionsbereich) entsprechend dem Stand der Technik einer Kaltziehoperation unterzogen. Dadurch können die entsprechenden Toleranzen in etwa halbiert werden. Dieses Verfahren ist jedoch betriebswirtschaftlich /wertanalytisch nicht optimal und führt zu hohen Produktkosten.

Weiterhin ist versucht worden, das Kammermaß mit Hilfe konventioneller Frästechnik einzuengen. Diese Bearbeitungstechnik konnte sich jedoch aus Kosten- und Leistungsgründen in der Serienfertigung nicht durchsetzen.

Es liegt daher der Erfindung die Aufgabe zugrunde, ein Verfahren zur Herstellung von Profilstäben und eine für das Verfahren geeignete Hochleistungsfräsanlage vorzuschlagen, mit dessen bzw. deren Hilfe metallische Führungselemente vornehmlich für die Staplerindustrie bereitgestellt werden können, um einen durchsatzsteigernden Verfahrensablauf und eine Reduzierung der Prozessnebenzeiten gegenüber der konventionellen Frästechnik zu erreichen.

Gelöst wird die Aufgabe in Bezug auf das Verfahren durch die Merkmale des Patentanspruchs 1, und in Bezug auf die Hochleistungsfräsanlage durch die Merkmale des Patentanspruchs 10.

Die Hochleistungsfräsanlage umfasst eine integrierte Stapelvorrichtung für Profile mit Längen bis zu mehreren Metern. Die modular aufgebaute Hochleistungsfräsanlage entfernt gezielt zu entkohlende Schichten gewalzter Profilstäbe und vermindert definiert deren Kammermesstoleranzen. Die Stapelvorrichtung ermöglicht einen autonomen Materialfluss innerhalb der Hochleistungsfräsanlage, so dass auf Einsatz externer, zeitaufwendiger Handhabungseinrichtungen verzichtet werden kann.

Darüber hinaus ermöglicht sie die nahtlose und systemkonforme Einbindung der Hochleistungsfräsanlage in die bestehende innerbetriebliche Gesamt-Materialflusssystematik, die wie folgt zu skizzieren ist: Entsprechend dem Stand der Technik werden die betrieblich erzeugten Profilstäbe zu Profilbunden zusammengefasst, wobei die Profilstäbe innerhalb eines Profilbundes in geometrisch vorbestimmter Abfolge und Lage zueinander, entsprechend einem sogenannten Stapelbild, angeordnet sind.

Die gestapelten Profilbunde sind die Basis eines optimierten inner- und außerbetrieblichen Materialflusses. Die integrierte automatisierte Stapelvorrichtung stellt die Anbindung an diesen Materialfluss sicher, ohne dass zusätzlicher Handhabungsaufwand erforderlich ist.

Die für das Hochleistungsfräsen vorgesehenen gewalzten Profilstäbe, vorzugsweise zu gestapelten Profilbunden in betrieblich üblichen Teilmengen zusammengefasst, werden im Bereich der Materialvorlage der Hochleistungsfräsanlage zur Bearbeitung positioniert.

Zur Vermeidung zusätzlichen Handhabungsaufwands werden die Profilbunde mittels eines zulaufseitigen Manipulators stabweise entstapelt. Dieser ist Teil einer aus zwei Manipulatoren und zwei Wendestationen bestehenden integrierten Stapelvorrichtung der Hochleistungsfräsanlage. Die Stapelvorrichtung dient zum Entstapeln, Stapeln, Wenden, Transportieren und Positionieren der Profilstäbe.

Der Manipulator fördert den Profilstab entweder direkt oder indirekt in die Fräsebene. Die direkte Zuführung erfolgt dann, wenn die geometrische Profilpositionierung im Profilbund identisch mit jener in der Fräsebene ist. Die indirekte Stabzuführung ist dann erforderlich, wenn der Profilstab zunächst um 180° um seine Längsachse gewendet werden muss, da seine Stapelposition um gerade 180° von der fixen Fräsposition abweicht. Die Wendefunktion wird durch die zulaufseitige Wendestation ausgeführt. Nach dem Fräsen werden die Profilstäbe mittels des auslaufseitigen Manipulators aus der Fräsebene entnommen und zu Profilbunden gestapelt. Dabei entspricht diese Stapelung jener des zulaufseitigen Profilbundes. Da es zur Ausführung des gewünschten Stapelbildes notwehdig ist, entsprechende Profile vor ihrem Ablegen in ein entstehendes auslaufseitiges Profilbund um 180° um seine Längsachse zu drehen, ist eine auslaufseitige Wendestation zur Ausführung dieser Funktion installiert.

Da U-förmige Profilstäbe aufgrund ihrer Querschnittsform nur eine einzige Kammer besitzen, ist lediglich eine Fräsoperation mit den entsprechenden Handhabungen erforderlich. H-förmige Profilstäbe hingegen, die zwei Kammern aufweisen, müssen zwei Fräsbearbeitungen mit den zugeordneten Handhabungen durchlaufen.

Die nach dem erfindungsgemäßen Gedanken, wie beschrieben, mit zwei Manipulatoren und zwei zugeordneten Wendestationen ausgestattete Stapelvorrichtung löst diese Handhabungsaufgabe durch den koordinierten Einsatz der Stapelvorrichtungsteilelemente nach dem Prinzip der minimierten Nebenzeiten.

Vorzugsweise wird die auslaufse tige Wendestation neben der horizontalen Wendeachse auch mit einer vertikalen Wendeachse ausgestattet, um unsymmetrische H-Profile in einem einzigen Durchlauf bearbeiten zu können. Somit ist prinzipiell sichergestellt, dass das als Walzprofil der Horizontalfräsanlage vorgelegte gestapelte Profilbund nach erfolgtem Fräsen kostengünstig als gestapeltes fertig gefrästes Profilbund im Auslaufbereich entnommen werden kann.

Die Fräsbearbeitung der Profilstäbe erfolgt in der Fräsebene der Hochleistungsfräsanlage. Während der Fräsoperation verbleibt der Profilstab ortsfest in der Profil-Spannvorrichtung mit nach oben, in Richtung des Fräskörpers, weisender Profilkammer. Mittels eines zumindest in zwei vertikalen Ebenen wirkenden Scheibenfräsersystems wird die gesamte Profillänge in einem einzigen Durchlauf überstrichen und somit spanabhebend bearbeitet.

Es wird durch entsprechende Überwachungsglieder sichergestellt, dass die Profilstäbe lagerichtig - mit nach oben weisender Profilkammer - von den Manipulatoren in die Spannvorrichtung eingetragen werden.

Die Profilstäbe werden mittels anstellbaren Klemmelementen horizontal gegen einen positionierbaren Festanschlag gespannt. Koordinierend mit der horizontalen Klemmung werden vertikal angeordnete Klernmelemente als Niederhalter wirksam, um die Profilstäbe spielfrei an die geraden Profilunterlagen der Spannvorrichtung anzudrücken.

Auf diese Weise können eventuell vorhandene Geradheits- und Verdrehungsabweichungen der Profilstäbe keinen negativen Einfluss auf das Fräsergebnis nehmen.

Ferner sind die horizontalen Klemmelemente so gestaltet, dass kammermaßverändernde Profildeformationen ausgeschlossen sind. Die horizontalen und vertikalen Klemmelemente sind an die unterschiedlichen Profilquerschnitte anpassbar.

Die wirksame Länge der Spannvorrichtung kann von einem einzigen entsprechend langem Profilstab eingenommen oder durch eine Kombination gleich oder unterschiedlich langer Profilstäbe belegt werden. Letztere werden im Zulaufbereich der Hochleistungsfräsanlage von unterschiedlichen, gestapelten Bunden aus eingeschleust. Überwachungssensoren vermeiden dabei Längenkollisionen.

Der aus mehreren Teilelementen aufgebaute Fräskörper ist in seinen maschinentechnischen Stellachsen mit Bezug auf die geometrische Mitte des Profil-Kammermaßes und hinsichtlich der Tiefe des Kammermaßbereichs definiert anstellbar, um die gewünschten Profilmaße nach dem Fräsen erreichen zu können. Dazu werden die profilspezifischen Ist-Maße vor dem Fräsen und während des Fräsprozesses durch mechanische oder optoelektronische Messaufnehmer detektiert. Durch entsprechende Messwertverarbeitung können jene Stellgrößen generiert werden, die den Fräskörper mittels Stellelementen maßgenau positionieren.

Der Fräsbereich ist vorzugsweise mit einem auf einer angetriebenen Welle positionierten anstellbaren Fräskörper ausgestattet, der zumindest in zwei voneinander getrennten Ebenen mit Schneidkörpern bestückt ist.

Daneben kann auch eine Version zur Anwendung gelangen, bei der zwei "halbe" Fräskörper, befestigt auf je einer zugeordneten angetriebenen Welle, versetzt zueinander anstellbar angeordnet sind. Diese ergänzen sich mit ihren Teilfunktionen zur Funktion des vollständigen Fräskörpers und haben den Vorteil, dass die nun deutlich getrennten schneidkörperbestückten Ebenen mit geringem Aufwand maßlich angestellt werden können.

In vorteilhafter Weise ist der Fräsbereich mit einer Entgrate- und Nachformeinrichtung ausgestattet, die mit der Fräskörpereinheit nachlaufend fest verbunden ist. Die Vorrichtung hat die Aufgabe, mögliche Gratbildungen am Übergang zwischen bearbeitetem Innenflanschbereich und unbearbeitetem horizontalen Flanschbreitenbereich definiert zu entfernen und eine vorbestimmte Übergangskontur zwischen den Flächen auszubilden. Ausgestaltet wird diese Vorrichtung durch in ihrem Durchmesser und ihrer Form angepasste angetriebene Fräser.

Zur weiteren Leistungssteigerung kann die Hochleistungsfräsanlage mit einer zweiten Fräsebene versehen werden, die parallel zu der vorhandenen in geringem Abstand angeordnet ist. Dazu wird der Fräskörperschlitten in seiner vertikalen Achse um 180° drehbar ausgestaltet. Hierdurch kann der Fräskörper die eine Fräsebene im Gleichlauf und die zweite im Gegenlauf überstreichen. Diese Ausführung wurde zeichnerisch nicht dargestellt.

Durch den modularen Aufbau der Hochfräsanlage kann auch die Prozesszeit gegenüber der konventionellen Frästechnik verkürzt werden. Das erfindungsgemäße Verfahren ermöglicht insbesondere durch Auswahl von Frässcheiben größeren Durchmessers eine höhere Vorschubgeschwindigkeit. Vorschubgeschwindigkeiten von bis zu 10 m/min sind möglich.

Insbesondere wird die Massenverteilung im als Funktionsbereich wirkenden Kammermaßbereich so ausgestaltet, dass nach der spanabhebenden Bearbeitung die Entkohlungsfreiheit dieses Bereichs gewährleistet werden kann.

In vorteilhafter Weise wird die Massenverteilung im Kammermaßbereich so ausgebildet, dass nach der spanabhebenden Bearbeitung gleichzeitig eine definierte Stärke der Profil-Flanschen erreicht wird.

Eine weitere Eigenschaftsverbesserung des spanabhebend bearbeiteten Walzprofils wird durch eine nachgeschaltete Vorrichtung zur Oberflächenhärtung seiner Laufflächen erreicht.

Weitere Funktionen, Funktionsmerkmale, Einzelheiten und Vorteile des erfinderischen Vorschlags, sollen mittels der in den Zeichnungen wiedergegebenen Ausführungsbeispiele erläuternd dargestellt werden. Dabei zeigt:
- **Fig. 1:**: Als Draufsicht einen Grundaufbau der Hochleistungsfräsanlage mit integrierter Stapelvorrichtung, mit Manipulatoren und Wendestationen.
- **Fig. 2:**: Eine Spann- und Fräskörpereingriffssituation bei einem U-Profil mit horizontalen/ vertikalen Klemmelementen und Abstandsmesser zur Positionsbestimmung.
- **Fig. 3:**: Eine Spann- und Profilkammermesssituation eines U-Profils mit horizontalen/vertikalen Klemmelementen und Messaufnehmer.
- **Fig. 4:**: Eine Spann- und Profilkammermesssituation eines symmetrischen H-Profils mit horizontalen/vertikalen Klemmelementen und Messaufnehmer.
- **Fig. 5:**: Eine Spann- und Profilkammermesssituation eines U-Profils mit Steg mit horizontalen/vertikalen Klemmelementen mit Messaufnehmer und Abstandsmesser.
- **Fig. 6:**: Eine Prinzipdarstellung a) eines 2-Scheiben-Fräskörpers einer Fräseinheit, mit einem Verschiebeelement, b) eines 2-Scheiben-Fräskörpers auf zwei Wellen.
- **Fig. 7:**: Eine Schemadarstellung der Bearbeitungsabfolgen bei der Hochleistungsfräsbearbeitung eines symmetrischen H-Profils.
- **Fig. 8:**: Eine Schemadarstellung zur Handhabungsabfolge eines unsymmetrischen H-Profils.
- **Fig. 9:**: Einen Profilquerschnitt eines metallischen Führungselements nach dem Stand der Technik.
- **Fig. 10**:: Einen warmgeformten Profilquerschnitt nach einer ersten Ausführungsform der Erfindung.
- **Fig. 11**:: Einen warmgeformten Profilquerschnitt nach einer zweiten Ausführungsform der Erfindung.
- **Fig. 12:**: Einen warmgeformten Profilquerschnitt nach einer mechanischen Bearbeitung aus einem Vorprofil nach Fig. 9 oder 10.

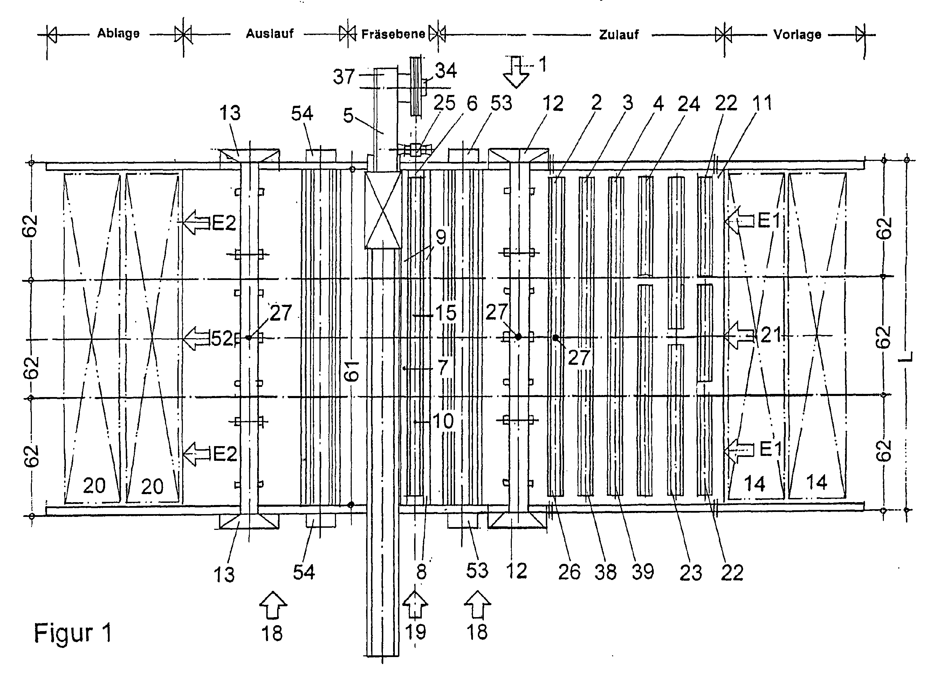

Nach **Fig. 1** setzt sich die Hochleistungsfräsanlage mit integrierter Stapelvorrichtung 1 aus im Wesentlichen gleichartigen Maschinenmodulen 62 zusammen, die in ihrer Längenaddition in etwa die Anlagenlänge L ergeben. L kann an die gewünschte Gesamtlänge der zu fräsenden Profile 2, 3, 4 oder Profilkombinationen 22, 23, 24 angepasst werden.

Die betrieblich gestapelten Profilbunde werden im Material-Vorlagebereich 14 zur Bearbeitung aufgelegt. Ein zulaufseitiger Manipulator 12, der Teil einer Stapelvorrichtung 18 ist, entnimmt sensorgestützt die Profilstäbe stabweise aus dem Bund bzw. aus den Bunden und transportiert sie in Profilzulaufrichtung 21 hin zur Fräsebene 15. Sind die Profilstäbe, entsprechend ihrem Stapelbild, so im Profilbund positioniert, dass die zu bearbeitende Profilkammer nach oben, in Richtung des Fräskörpers 34 zeigt, können sie direkt der Fräsebene 15 zugeführt werden.

Zeigt hingegen die Profilkammer nach unten, in Richtung des Maschinenbetts, so müssen die Profilstäbe mittels einer zulaufseitigen Wendevorrichtung 53, die ebenfalls Teil der Stapelvorrichtung 18 ist, zuvor um 180° um ihre Längsachse gewendet werden. Diese indirekte Zuführung stellt sicher, dass auch diese Profilstäbe lagerichtig, mit nach oben weisender Profilkammer, in die Fräsebene 15 eingetragen werden. Die Ebene E1-E1 ist die Referenzebene für das automatische Entstapeln.

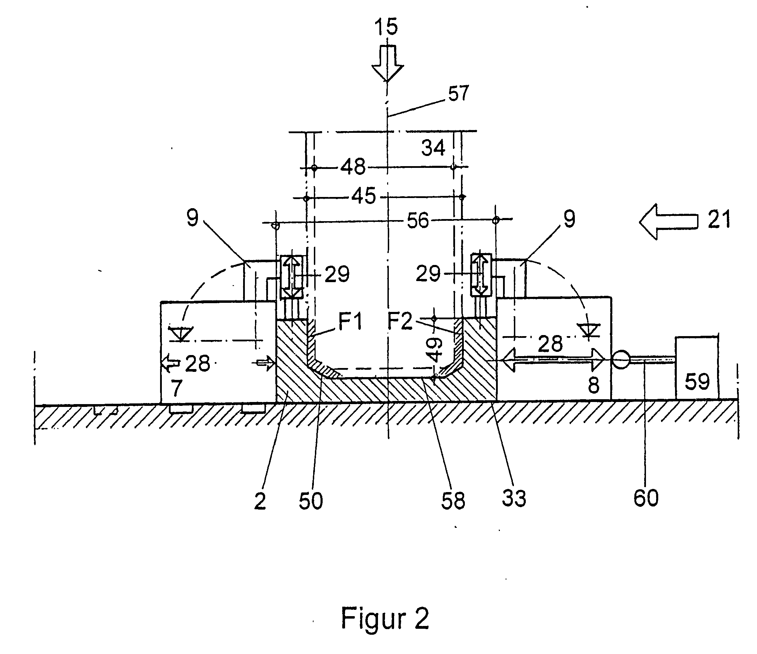

**Fig. 2** macht die Profilstab-Spannsituation in der Fräsebene 15 am Beispiel eines Profilstabs mit U-förmigem Querschnitt 2 deutlich. Der Profilstab wird horizontal durch die Klemmelemente 7 und 8 eingespannt. Vertikale Klemmelemente 9 besitzen die Funktion von Niederhaltern. Der feste Profilanschlag 7 und die beweglichen horizontalen Klemmelemente 8 sind bezüglich ihrer horizontalen Bewegungen durch Pfeile 28 gekennzeichnet; die Bewegungsrichtung der eingeschwenkten vertikalen Klemmelemente 9 wird durch 29 angezeigt. Mittels einer koordinierten Klemmbewegung zwischen 7, 8 und 9 wird der Profilstab 2 fest und gerade gegen die ebene Auflagefläche 33 des Tischbereichs 11 angelegt.

Die Breite 56 des Profilquerschnitts 2, kann durch den horizontalen Abstandsmesser 59 mit Messfühler 60 ermittelt werden, da die Position des maßlich bekannten Klemmelements 7 fix ist und Klemmelement 8 zum Zeitpunkt der Messung fest an 2 anliegt. Aus der Breite 56 wird rechnerisch die Profilmitte 57 bestimmt. Diese breitenbezogene Mitte ist jedoch nur dann mit der Mitte der Profilkammerbreite vor dem Fräsen 48 identisch, wenn die beiden Schenkel des U-Profils gleich stark sind.

Zur Ausführung der Fräsoperation im Kammermaßbereich des Profils wird der Fräskörper 34, dessen vorgegebene zerspanungstechnische Wirkbreite der gewünschten Profilkammerbreite nach dem Fräsen 45 entspricht, auf die Profilmitte 57 positioniert und soweit in Richtung Profilkammer hin abgesenkt, bis sich die gewünschte Profilkammertiefe 49 ergibt. Die Differenz zwischen der Profilkammerbreite vor dem Fräsen 48 und der Profilkammerbreite nach dem Fräsen 45 entspricht den abzuspanenden Bereichen F1, F2, wie beispielhaft für ein U-Profil gezeigt.

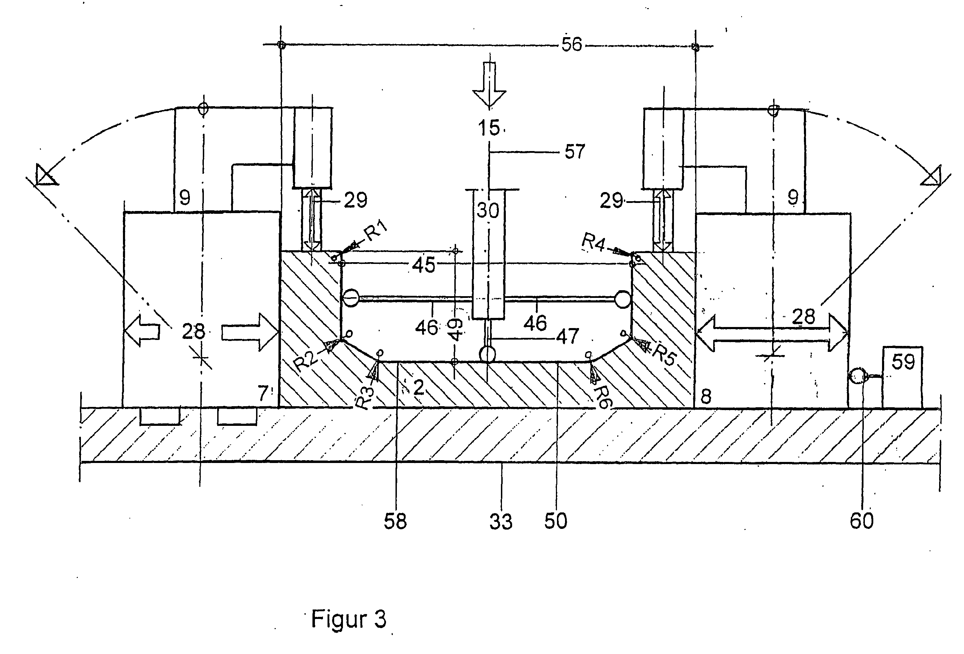

Mittels des in **Fig. 3** dargestellten, in die U-Profil-Kammer eintauchenden Messaufnehmers 30, kann die Profilmitte 57 direkt gemessen werden. Bei gleicher Schenkelstärke ist sie identisch mit der errechneten Profilmitte. Der Messaufnehmer 30 gestattet darüber hinaus die Erfassung der gesamten Profilkammerkontur 50, 58, dargestellt durch die Kurvenzüge R1 bis R6.

Diese Konturerfassungsfunktion lässt sich in der technischen Ausgestaltung des optoelektronischen Messaufnehmers auch dazu nutzen, kontinuierlich das Fräsergebnis maßlich zu überwachen, um auf Verschleißerscheinungen an den Hartmetallschneidplatten des Fräskörpers rechtzeitig reagieren zu können.

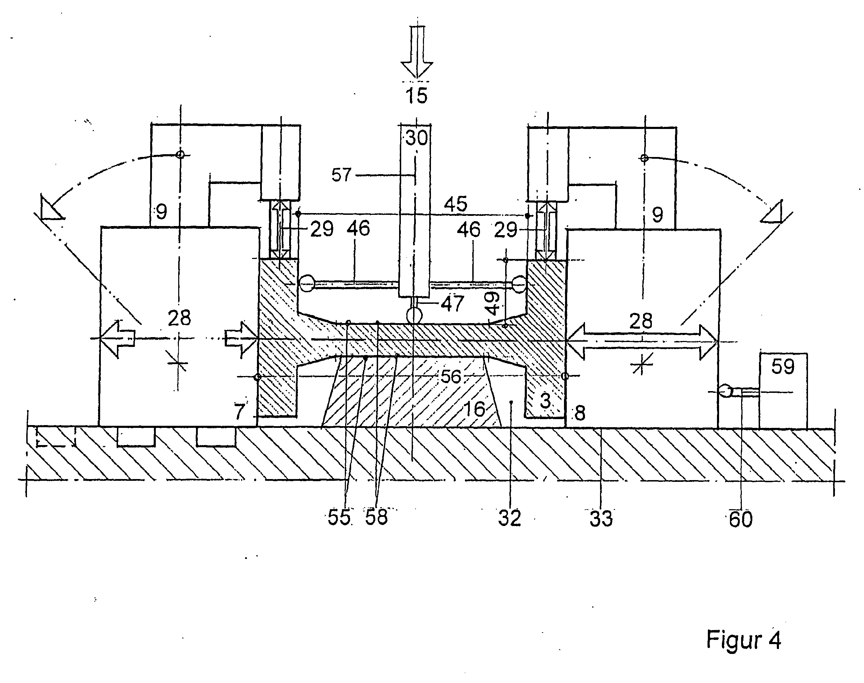

Während U-Profile infolge ihres geraden Profilrückens großflächig auf der Auflagefläche 33 angelegt werden, müssen die H-Profile 3 im Bereich der dem Fräskörper 34 abgewandten Kammer, beim Spannen mit einer angepassten Profilunterlage 16, **Fig. 4****,** versehen werden. Der erforderliche Spann-Freiraum 32 sorgt für statisch bestimmte Spannverhältnisse.

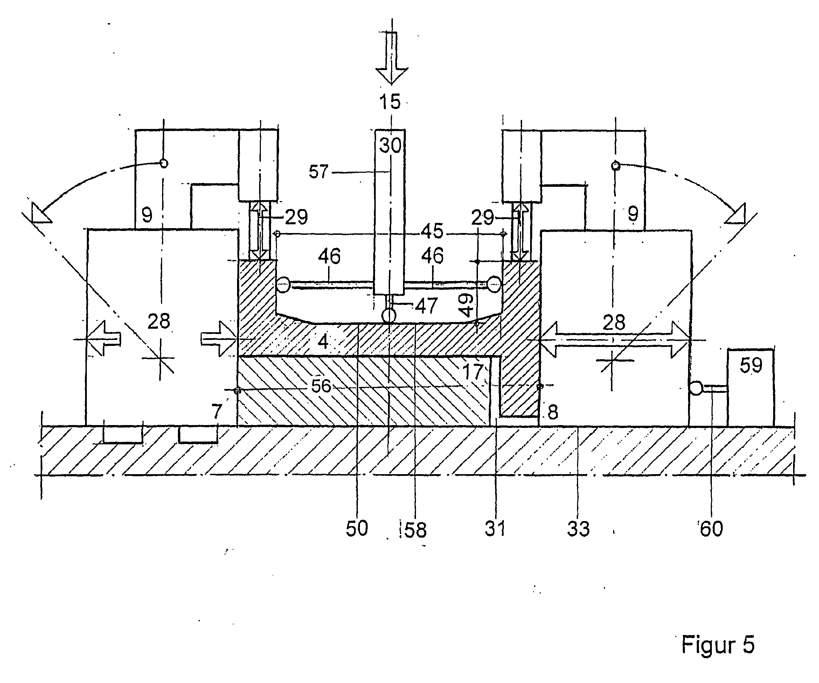

Eine ähnliche Spannsituation gilt auch für U-Profile mit Steg 4, wo ein entsprechend angepasster Spann-Freiraum 31 vorgesehen ist, **Fig. 5****.**

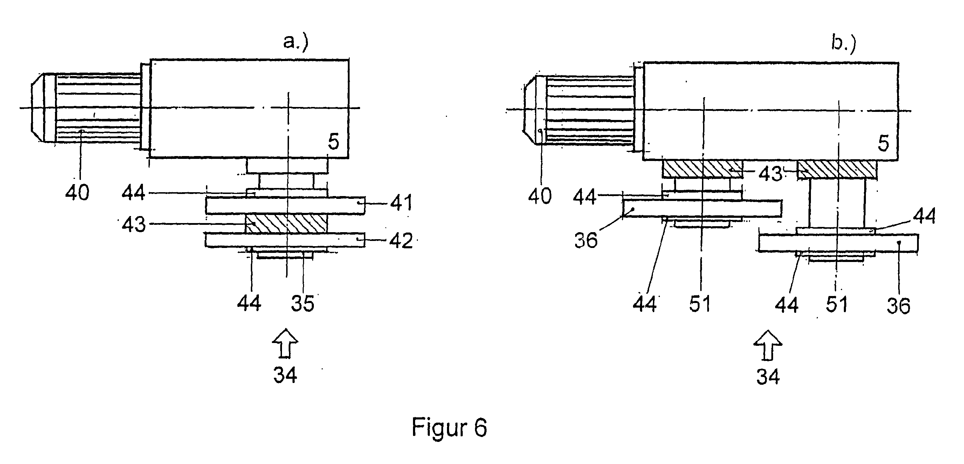

Hinsichtlich der Ausgestaltung der Fräseinheit 5 kann gemäß **Fig. 6** sowohl die Variante a) als auch die Ausführung b) zur Anwendung gelangen.

Bei Variante a) sind die beiden Scheibenfräser 41 und 42 des Fräskörpers 34 auf einer gemeinsamen Welle 35 positioniert. Die Fixierelemente 44 erzeugen die seitliche Begrenzung der Scheibenfräser 41, 42.

Über das Verschiebeelement 43 lässt sich die zerspanungstechnische Wirkbreite des Fräskörpers 34 einstellen.

Die Ausführung b) verwendet nebeneinander angeordnete Scheibenfräser 36 mit eigenen angetriebenen Wellen 51 Der Vorteil dieser Ausführung ist, dass die zerspanungstechnische Wirkbreite dieses Fräskörpers 34 mittels der beiden Verschiebeelemente 43 infolge Einzelanstellung leichter zu realisieren ist.

Zur Sicherstellung einer deutlich über das konventionelle Fräsen hinausgehenden Wirtschaftlichkeit ist die Hochleistungsfräsanlage mit zwei Konstruktionsmerkmalen ausgestattet, die Voraussetzung zur Erreichung dieses Ziels sind. Das erste Merkmal ist die Verwendung eines Fräskörpers 34 mit Scheibenfräsern großen Durchmessers > 600 mm, um die Hauptzeiten der eigentlichen Zerspanungsoperation durch Realisierung hoher Vorschubgeschwindigkeiten von etwa 4 bis 8 m/min gering zu halten. Das zweite Merkmal ist die deutliche Reduzierung der Prozessnebenzeiten, die im Wesentlichen durch die Profilstabzufuhr, durch die Profilstabpositionierung in der Fräsebene 15 und durch die Profilstababfuhr verursacht werden.

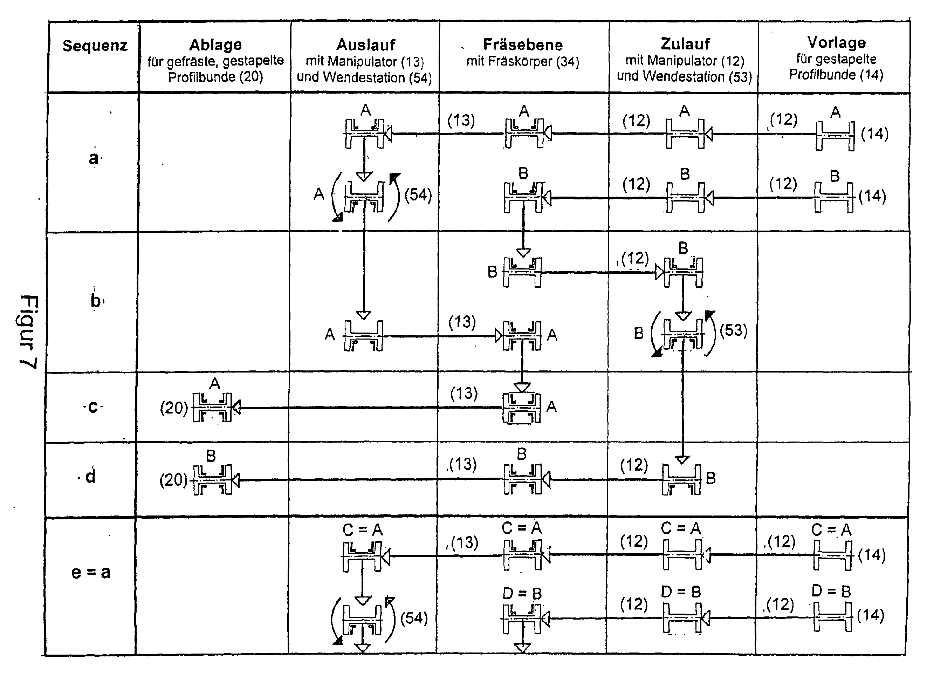

Der erfinderische Gedanke der integrierten Stapelvorrichtung 18 ist der Lösungsweg zur Minimierung der Prozessnebenzeiten. **Fig. 7** stellt die Abfolge von Handhabungsoperationen am Beispiel eines symmetrischen H-Profils dar, die sich durch den zielgerichteten Einsatz von im Automatikbetrieb arbeitenden Manipulatoren 12, 13 und Wendestationen 53, 54 auszeichnet. Die Nebenzeitenoptimierung wird gemäß dem Ablaufschema allein dadurch deutlich, dass bei der Gesamtheit aller ablaufenden Handhabungsoperationen eine relativ große Profilstabverfügbarkeit in der Fräsebene 15 zu erkennen ist, die Voraussetzung für eine Fräsoperation ist.

So zeigt Sequenz a , dass Profilstab A mit dem zulaufseitigen Manipulator 12 vom Vorlagebereich 14 in die Fräsebene 15 transportiert wird. Während der auslaufseitige Manipulator 13 den Profilstab A nach dem Fräsen der Profilkammer aus der Fräsebene 15 entnimmt und zur auslaufseitigen Wendestation 54 transportiert, schafft Manipulator 12 in übergreifender Arbeitsweise bereits den nächsten Profilstab B aus dem

Vorlagebereich heran und fördert ihn in Richtung Fräsebene 15. Nach dem Fräsen wird Profilstab B von Manipulator 12 zur zulaufseitigen Wendestation 53 transportiert - Sequenz b - und dort um 180° um seine Längsachse gewendet, sodass nun die noch unbearbeitete Profilkammer nach oben zeigt.

Zuvor ist Profilstab A durch die Wendestation 54 um 180° gewendet und durch Manipulator 13 in die Fräsebene 15 transportiert worden, wo die Fräsoperation in der zweiten Kammer dieses Profilstabs A ausgeführt wurde. Profilstab A ist nunmehr fertig bearbeitet und wird, wie Sequenz c, zeigt, durch Manipulator 13 zur Ablage 20 transportiert und gestapelt. Die Ebene E2-E2, ist die Referenzebene für das automatische Stapeln der fertig bearbeiteten Profilstäbe.

Profilstab B vollendet in Sequenz d, den Anlagendurchlauf, nachdem seine zweite Kammer gefräst und er mit Manipulator 13 in Richtung Ablage transportiert wurde. Mit Sequenz e, gleichbedeutend a, beginnt mit den Profilen C = A und D = B ein neuer Zyklus der Profilbearbeitung.

Während nach **Fig. 7** die Fräsbearbeitung eines symmetrischen H-Profils handhabungstechnisch durch die Kombination von zwei Manipulatoren 12, 13 und zwei Wendestationen 53, 54 mit horizontalen Wendeachsen 38, 39 automatisiert werden kann, gelingt dies bei unsymmetrischen H-Profilen nicht ohne weiteres.

Um jedoch auch diese Profilgruppe in einem einzigen Durchlauf durch die Hochleistungsfräsanlage in beiden Kammern K1 und K2 fertig fräsen zu können, wird in weiterer Ausgestaltung des erfinderischen Gedankens vorgeschlagen, die Wendestationen 53, 54 zusätzlich zu ihren horizontalen Wendeachsen 38, 39 jeweils auch mit vertikalen Wendeachsen 27 zu versehen, die das Wenden der Profilstäbe um die Vertikalachse 27, im maschinenbautechnischen Freiraum erlaubt.

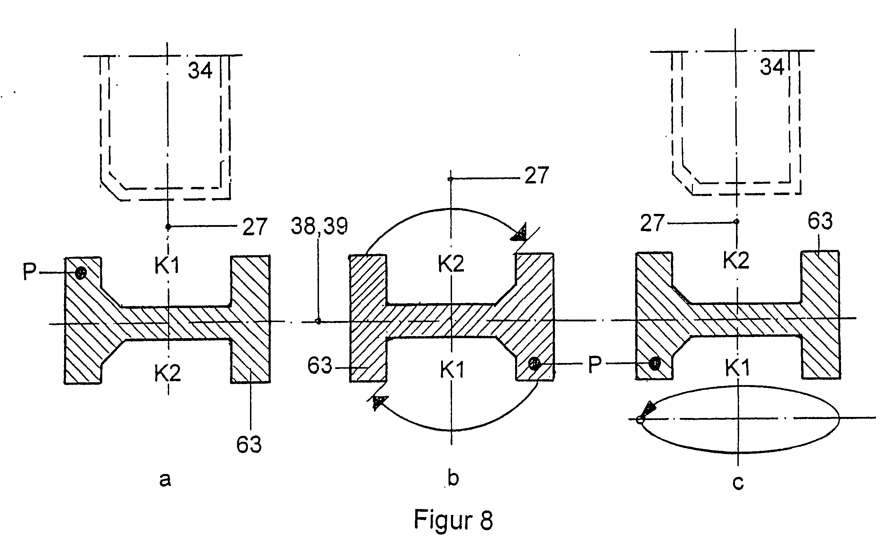

In **Fig. 8** a ist die Ausgangsposition des unsymmetrischen H-Profilquerschnitts 63 dargestellt. Der Profilflansch, der durch Schrägen mit dem Steg verbunden ist, trägt zu seiner Kennzeichnung den geometrischen Bezugspunkt P; der zweite Flansch mit einem Radienübergang trägt keine Markierung. Die Profilkammer K1 zeigt nach oben in Richtung des Fräskörpers 34. Wird der Profilquerschnitt um 180° um seine horizontale Längsachse, Achse 38, 39, gewendet, ergibt sich die Situation nach b. Profilkammer K2 ist zwar nach oben hin, in Richtung des Fräskörpers 34 orientiert, aber die Flanschlagen des Profilquerschnitts 63 sind vertauscht, sodass keine Fräsoperation möglich ist. Erst wenn der Profilstab zusätzlich um 180° um seine vertikale Achse 27 gewendet wurde - Darstellung c - kann er die Position einnehmen, die infolge geometrischer Übereinstimmung eine Fräsbearbeitung der zweiten Kammer K2 gestattet: die Kammer K2 ist in Richtung des Fräskörpers 34 orientiert und Schrägen- und Radienübergänge befinden sich auf der richtigen Profilquerschnittseite 63.

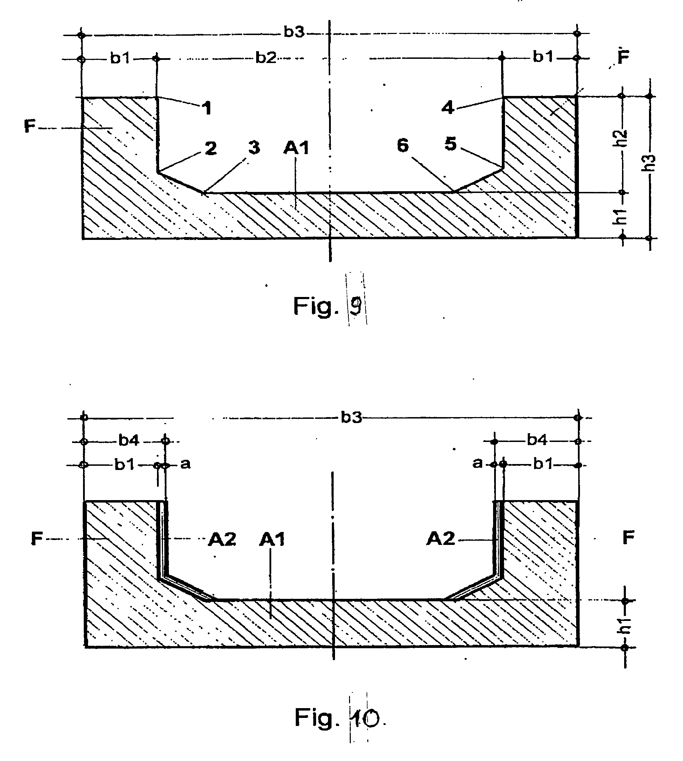

Entsprechend dem Stand der Technik wird die Hauptmenge der dem Staplerbau zufließenden Profilstäbe als Walzprofil ausgeführt. Ein derartiges Walzprofil ist in **Fig. 9** beispielhaft im Querschnitt dargestellt.

In dem durch die Außenmaße b3 und h3 bestimmten U-förmigen Profil mit der Fläche A1, den Flanschen F in den Abmessungen b1/h2 und der Stegstärke h1, befindet sich ein als Funktionsbereich wirkender Kammermaßbereich b2/h2, der durch einen Kurvenzug zwischen den Punkten 1, 2 und 3 sowie 4, 5 und 6 definiert ist.

Hierin werden Rollen für translatorische Bewegungen von Linearführungselementen so positioniert, dass sie in dem offenen Kammermaßbereich b2/h2 zwischen den beiden Profilflanschen F, mit den Abmessungen b1/h2 eingreifen.

Mittels moderner Warmwalz- und Richtanlagen können Kammermaßtoleranzen von 1,0 mm bis hin zu 0,8 mm reproduzierbar eingestellt werden. Für die Klasse der Stapler mit hohen Hubhöhen, etwa im Bereich von 5,0 m bis 14,0 m, die schwerpunktmäßig in der Lagertechnik zum Einsatz gelangen, ist die durch Warmwalzen allein erreichbare Kammermaßtoleranz zu grob, weil die Neigung des voll ausgefahrenen Gerüstes in Grenzen gehalten werden muss, damit die Schwerpunktlage des Fahrzeugs nicht negativ beeinflusst wird.

Fertigungstechnisch wird dieses Problem durch eine nach dem Warmwalzprozess stattfindende Kaltziehoperation gelöst.

Durch das Kaltziehen können Kammermaßtoleranzen von 0,4 mm reproduzierbar dargestellt werden, was in etwa einer Halbierung des walztechnisch erreichbaren Toleranzkanals entspricht.

Eine weitere Reduzierung der Kammermaßtoleranz auf Werte von kleiner als 0,4 mm ist durch das Kaltziehen nicht prozesssicher darzustellen.

Dafür gibt es folgenden Grund:
Durch den Kaltziehprozess wird nicht nur die gezielt gewollte Querschnittsverminderung von A1 erreicht, sondern es muss auch aus prozessbedingten Stoff-Flussgründen in Kauf genommen werden, dass die Profilstäbe mehr oder weniger krumm werden und deshalb einer anschließenden Richtoperation bedürfen, um sie verwendungsfähig zu machen.

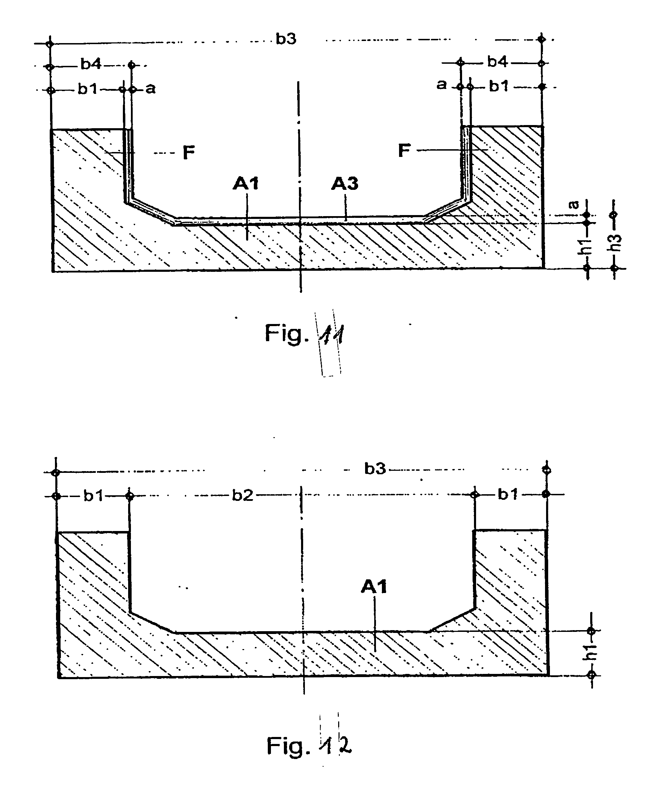

Diese Richtoperation zur Minimierung von Geradheitsabweichung und Verdrehung, beeinflusst zwangsläufig auch die Toleranz des Kammermaßes b2, weil es sich bei den U- oder H-förmigen Profilen des Hubmastbaus um sogenannte "offene" Profile handelt. Das vorgeschlagene Verfahren kombiniert die Teilschritte der warmumformtechnischen Herstellung eines gezielt angepassten Vorprofils, wie in **Fig. 10** und **Fig. 11** dargestellt, mit dem Schritt der nur örtlich erfolgenden spanabhebenden Bearbeitung dieses Vorprofils im Kammermaßbereich, ausgeführt mittels einer in Rede stehenden Hochleistungsfräsanlage.

Dabei werden das angepasste Vorprofil gemäß **Fig. 10** bzw. **Fig. 11** und das endgültige, partiell mechanisch bearbeitete Fertigprofil nach **Fig. 12** so aufeinander abgestimmt, dass endgültiges Profil nach **Fig. 12** und warmgewalztes, dem Stand der Technik entsprechendes Serienprofil gemäß der **Fig. 9****,** im Wesentlichen gleiche Widerstandsmomente und vergleichbare Abmessungen besitzen.

Dadurch ist gewährleistet, dass Profile, die nach dem erfindungsgemäßen Verfahren hergestellt werden, in vorhandene Hubmastkonstruktionen ohne teure und zeitaufwendige Änderungen eingebaut werden können.

Das nach dem erfindungsgemäßen Verfahren hergestellte Profil besitzt gegenüber dem zum Stand der Technik zählenden Ziehprofil folgende Vorteile:

### a). Reduzierte Kammermaßtoleranz von 0,2 mm

Die prozesssicher erreichbare Toleranz mit 0,2 mm des Kammermaßes b2, die eine Halbierung der Toleranz des Ziehprofils darstellt, ermöglicht es, neben einem geringeren Spiel, auch die Hubmast-Rollenbevorratung von 3 bzw. 2 Rollen pro Profil, auf eine einzige Rolle zu reduzieren. Neben entfallendem Sortieraufwand beim Hubmastbau, können so auch wesentliche Bestandskosten eingespart werden.

### b). Entkohlungsfreie Profillaufflächen

Zur Herstellung des Ziehprofils wird ein warmgewalztes oder stranggepresstes Vorprofil eingesetzt, dass in der Regel verfahrensbedingte Entkohlungstiefen von 0,3 mm bis 0,5 mm aufweist.

Die Entkohlung kann durch das Kaltziehen nicht beseitigt werden.

Bei den zum Einsatz kommenden un- und niedriglegierten Baustählen für Hubmastprofile ist jedoch der Kohlenstoff (Carbid) der wesentliche Träger der Härte und Festigkeit.

Daher zeigen entkohlte Profile einen Härteabfall in ihren Oberflächenbereichen.

Dies trifft auch für die stark beanspruchten Laufflächenbereiche des Profils zu, schematisch dargestellt in der **Fig. 9****,** durch die Kurvenzüge zwischen den Punkten 1, 2 und 3 bzw. 4, 5 und 6.

Ein entkohlter Laufflächenbereich ist unter der Einwirkung der durch die Rollen ausgeübten Druckkräfte stärker verschleißanfällig und besitzt eine geringere zulässige Hertzsche Pressung als nicht entkohlte Bereiche des Profils.

Bei dem angepassten Vorprofil mit den Flanschen F nach dem erfindungsgemäßen Verfahren ist, wie **Fig. 10** zeigt, im Laufflächenbereich Material a, entsprechend den beiden Flächen A 2 an den Flanschen F, in den Abmessungen mit b1 + a = b4, bis zur Flanschhöhe h2 "aufgelegt" worden.

In einem zweiten Ausführungsbeispiel nach **Fig. 11****,** ist das Vorprofil im Kammermaßbereich durchgängig in den Abmessungen mit Material b1 + a = b4 und der Steg h1 + a = h3 "aufgelegt", wie durch die Fläche A 3 in **Fig. 11** dargestellt.

Diese Variante hat den Vorteil, dass ein dritter stark zu beanspruchender Laufflächenbereich, schematisch dargestellt in der **Fig. 9****,** durch den Kurvenzug zwischen den Punkten 3 und 6, geschaffen wird.

Diese Materialzugabe h1 + a = h3 mit der Fläche A3 in der **Fig. 11** ist so ausreichend bemessen, dass die Entkohlung des Walzprofils bei der spanabhebenden Bearbeitung sicher entfernt wird.

Dies gilt auch für den Fall, dass der Spanabtrag unsymmetrisch erfolgen muss, um warmumformtechnisch bedingte Dickenunterschiede in den beiden Flanschen F, mit b1 + a = b4, in den **Fig. 10** und **Fig. 11** zu egalisieren.

### c.) Reduzierung des Fertigungsaufwands gegenüber dem Ziehprofil

Durch die nur auf die Laufflächen beschränkte spanabhebende Bearbeitung nach den Kurvenzügen 1, 2, 3 und 4, 5, 6 im Kammermaßbereich b2/h2, ist das erfindungsgemäße Verfahren wertanalytisch optimiert.

Verfahrensbedingt muss dagegen beim Kaltziehen der gesamte Profilumfang bearbeitet werden, also auch jene Bereiche, deren Verfeinerung keinen Produktnutzen erzeugt. Als Nebeneffekt der spanabhebenden Bearbeitung der Profillaufflächen ist die entfallende Entfernung von fallweise auftretenden Oberflächenfehlern anzusehen, die vor dem Ziehprozeß durch händisches Schleifen unabdingbar erforderlich ist. Während das Ziehprofil mehrfache Arbeitsgänge erfordert, kommt das erfindungsgemäße Verfahren mit nur einem einzigen Arbeitsgang aus.

### d.) Möglichkeit zur effektiven Oberflächenhärtung der Führungselemente

Mit einer weiteren Vorrichtung, die dem Fertigungsprozess der spanabhebenden Bearbeitung der Profilflächen nachgeschaltet wird, kann durch eine Oberflächenhärtung der Laufflächen der Verschleiß der Führungselemente sehr deutlich reduziert werden. Die auf dem Mechanismus der Martensitbildung basierende Oberflächenhärtung erzeugt nur dann die höchst mögliche Härteannahme und somit den geringsten Laufflächenverschleiß, wenn nach Entfernung der entkohlten Oberflächenbereiche, der höhere Kohlenstoffgehalt des Grundwerkstoffs härtetechnisch voll wirksam werden kann.

## Patentansprüche

1. Verfahren zur Herstellung als metallische Führungselemente dienender Profilstäbe durch die Kombination von Warmformgebung mit anschließender spanabhebender Bearbeitung, bei dem in der Stufe der Warmformgebung ein in seiner Querschnitt-Massenverteilung an die Stufe der spanabhebenden Bearbeitung angepasstes Vorprofil derart erzeugt wird, dass in der Stufe der spanabhebenden Bearbeitung durch partiellen Spanabtrag im Funktionsbereich der Profilstäbe enge Maßtoleranzen eingestellt werden, **dadurch gekennzeichnet, dass** bei der spanabhebenden Bearbeitung eine Fräsoperation durch einen positionsgeregelten Fräskörper (34) mit Frässcheiben großen Durchmessers (36, 41, 42) ausgeführt wird, und dass der Materialfluss innerhalb der Hochleistungsfräsanlage (1) autonom durch eine integrierte Stapelvorrichtung (18) erfolgt, die aus einem im Materialfluss vor der Fräsebene (15) angeordneten, zulaufseitigen Manipulator (12) mit Wendestation (53), und aus einem im Materialfluss hinter der Fräsebene (15) angeordneten, auslaufseitigen Manipulator (13) mit Wendestation (54) besteht, wobei beide Manipulatoren (12, 13) zum Transport der Profilstäbe in Richtung Fräsebene (15), und beide Wendestationen (53, 54) zum Wenden der Profilstäbe zumindest um ihre horizontale Längsachse ausgebildet sind.

2. Verfahren nach Anspruch 1, **dadurch gekennzeichnet, dass** die zu fräsenden Profilstäbe der Anlage in Form gestapelter Profilbunde vorgelegt werden und der zulaufseitige Manipulator (12) sensorunterstützt einen langen Profilstab oder gleichzeitig mehrere kurze Profilstäbe aus dem jeweiligen gestapelten Profilbund entnimmt und in Richtung Fräsebene (15) transportiert.

3. Verfahren nach einem der Ansprüche 1 oder 2, **dadurch gekennzeichnet, dass** die fertig gefrästen Profilstäbe durch den auslaufseitigen Manipulator (13) im Ablagebereich (20) wieder zu einem Profilbund sensorunterstützt gestapelt werden.

4. Verfahren nach einem der Ansprüche 1 bis 3, **dadurch gekennzeichnet, dass** alle Entstapelungs-, Handhabungs-, Wende- und Stapelfunktionen für alle Profilstäbe programmgesteuert und automatisch ablaufen.

5. Verfahren nach einem der Ansprüche 1 bis 4, **dadurch gekennzeichnet, dass** neben einem Automatikbetrieb auch ein Funktionsablauf mit einzelnen Profilstäben möglich ist, die der Hochleistungsfräsanlage in einer Ebene (E1-E1) vorgelegt werden.

6. Verfahren nach einem der Ansprüche 1 bis 5, **dadurch gekennzeichnet, dass** die von den Manipulatoren (12, 13) der Fräsebene (15) zugeführten Profilstäbe durch das Zusammenspiel von horizontalen (7, 8) und vertikalen Klemmelementen (9) in fräsgerechter ortsfester Lage eingespannt werden und die dabei eingenommene konturbezogene Ist-Position der Profilstäbe durch einen horizontalen Abstandsmesser (59) und einen Messaufnehmer (30) erfasst wird.

7. Verfahren nach einem der Ansprüche 1 bis 6, **dadurch gekennzeichnet, dass** die gemessene konturbezogene Ist-Position des Profilstabs zur Anstellung des Fräskörpers (34) derart verwendet wird, dass der horizontale und vertikale Spanabtrag im Rahmen der Fräsoperation zu den gewünschten Soll-Maßen in der Profilkammer des Profilstabs führt.

8. Verfahren nach einem der Ansprüche 1 bis 7, **dadurch gekennzeichnet, dass** ein einziger Fräsdurchlauf durchgeführt wird.

9. Verfahren nach einem der Ansprüche 1 bis 8, **dadurch gekennzeichnet, dass** die Laufflächen der Profilstäbe nach der spanabhebenden Bearbeitung oberflächengehärtet werden.

10. Hochleistungsfräsanlage zur Durchführung der spanabhebenden Bearbeitung des Verfahrens nach Anspruch 1, **dadurch gekennzeichnet, dass** die Hochleistungsfräsanlage (1) zur spanabhebenden Bearbeitung warmgeformter Profilstäbe einen in einer Fräsebene (15) angeordneten, positionsgeregelten Fräskörper (34) mit Frässcheiben großen Durchmessers (36, 41, 42) und eine Stapelvorrichtung (18) aufweist, die aus einem im Materialfluss vor der Fräsebene (15) angeordneten, zulaufseitigen Manipulator (12) mit Wendestation (53), und aus einem im Materialfluss hinter der Fräsebene (15) angeordneten, auslaufseitigen Manipulator (13) mit Wendestation (54) besteht, wobei beide Manipulatoren (12, 13) zum Transport der Profilstäbe in Richtung Fräsebene (15), und beide Wendestationen (53, 54) zum Wenden der Profilstäbe zumindest um ihre horizontale Längsachse ausgebildet sind.

11. Hochleistungsfräsanlage nach Anspruch 10, **dadurch gekennzeichnet, dass** der Fräskörper (34) einen Durchmesser von mindestens 600 mm besitzt.

12. Hochleistungsfräsanlage nach einem der Ansprüche 10 oder 11, **dadurch gekennzeichnet, dass** der Fräskörper (34) mit einer nachlaufenden Entgrate- und Nachformeinrichtung (25) versehen ist.

13. Hochleistungsfräsanlage nach einem der Ansprüche 10 bis 12, **dadurch gekennzeichnet, dass** der Fräskörper (34) aus zueinander anstellbaren Scheibenfräsern (36, 41, 42) besteht.

14. Hochleistungsfräsanlage nach Anspruch 13, **dadurch gekennzeichnet, dass** die Scheibenfräser (36, 41, 42) auf einer gemeinsamen Antriebswelle (35) oder auf getrennten Antriebswellen (51) positioniert sind.

15. Hochleistungsfräsanlage nach einem der Ansprüche 10 bis 14, **dadurch gekennzeichnet, dass** parallel zu der vorhandenen Fräsebene (15) eine zweite Fräsebene (15) zur Bearbeitung der Profilstäbe im Hin- und Rücklauf mit dem Fräskörper (34) angeordnet ist.

16. Hochleistungsfräsanlage nach einem der Ansprüche 10 bis 15, **dadurch gekennzeichnet, dass** der Fräskörper (34) um 180° schwenkbar ausgeführt ist.

## Claims

1. Method for producing profiled bars that serve as metal guide elements, by the combination of hot-forming with subsequent machining, in which, in the hot-forming stage, a pre-profile with a cross-sectional mass distribution tailored to the machining stage is produced such that, in the machining stage, narrow dimensional tolerances are set by partial chip removal in the functional area of the profiled bars, **characterized in that**, during machining, a milling operation is carried out by a position-controlled milling body (34) having large-diameter milling cutters (36, 41, 42), and **in that** the flow of material within the high-performance milling machine (1) takes place autonomously through an integrated stacking apparatus (18) which consists of an inflow-side manipulator (12), arranged upstream of the milling plane (15) in the flow of material, having a turning station (53), and of an outflow-side manipulator (13), arranged downstream of the milling plane (15) in the flow of material, having a turning station (54), wherein the two manipulators (12, 13) are designed to transport the profiled bars in the direction of the milling plane (15), and the two turning stations (53, 54) are designed to turn the profiled bars at least about their horizontal longitudinal axes.

2. Method according to Claim 1, **characterized in that** the profiled bars to be milled are placed in front of the machine in the form of stacked profile bundles and the inflow-side manipulator (12), with the aid of sensors, removes a long profiled bar or a plurality of short profiled bars at the same time from the respective stacked profile bundle and transports it or them in the direction of the milling plane (15).

3. Method according to either of Claims 1 and 2, **characterized in that** the finish-milled profiled bars are stacked, with the aid of sensors, by the outflow-side manipulator (13) in the deposition area (20) to form a profile bundle again.

4. Method according to one of Claims 1 to 3, **characterized in that** all of the unstacking, handling, turning and stacking functions for all of the profiled bars run in a program-controlled and automatic manner.

5. Method according to one of Claims 1 to 4, **characterized in that**, in addition to automatic operation, functioning is also possible with individual profiled bars which are placed in front of the high-performance milling machine in a plane (E1-E1).

6. Method according to one of Claims 1 to 5, **characterized in that** the profiled bars fed by the manipulators (12, 13) to the milling plane (15) are clamped by the interaction of horizontal clamping elements (7, 8) and vertical clamping elements (9) in a fixed position suitable for milling, and the contour-related actual position assumed in the process by the profiled bars is sensed by a horizontal distance measuring means (59) and a sensing element (30).

7. Method according to one of Claims 1 to 6, **characterized in that** the measured contour-related actual position of the profiled bar is used to position the milling body (34) such that the horizontal and vertical chip removal during the milling operation results in the desired nominal dimensions in the profile chamber of the profiled bar.

8. Method according to one of Claims 1 to 7, **characterized in that** a single milling phase is carried out.

9. Method according to one of Claims 1 to 8, **characterized in that** the running surfaces of the profiled bars are surface-hardened after machining.

10. High-performance milling machine for carrying out the machining according to Claim 1, **characterized in that** the high-performance milling machine (1) for machining hot-formed profiled bars has a position-controlled milling body (34), arranged in a milling plane (15), having large-diameter milling cutters (36, 41, 42), and a stacking apparatus (18) which consists of an inflow-side manipulator (12), arranged upstream of the milling plane (15) in the flow of material, having a turning station (53), and of an outflow-side manipulator (13), arranged downstream of the milling plane (15) in the flow of material, having a turning station (54), wherein the two manipulators (12, 13) are designed to transport the profiled bars in the direction of the milling plane (15), and the two turning stations (53, 54) are designed to turn the profiled bars at least about their horizontal longitudinal axes.

11. High-performance milling machine according to Claim 10, **characterized in that** the milling body (34) has a diameter of at least 600 mm.

12. High-performance milling machine according to either of Claims 10 and 11, **characterized in that** the milling body (34) is provided with a subsequent deburring and post-forming device (25).

13. High-performance milling machine according to one of Claims 10 to 12, **characterized in that** the milling body (34) consists of side milling cutters (36, 41, 42) that are positionable with respect to one another.

14. High-performance milling machine according to Claim 13, **characterized in that** the side milling cutters (36, 41, 42) are positioned on a common drive shaft (35) or on separate drive shafts (51).

15. High-performance milling machine according to one of Claims 10 to 14, **characterized in that** a second milling plane (15) for machining the profiled bars in forward and return motion with the milling body (34) is arranged parallel to the milling plane (15) that is present.

16. High-performance milling machine according to one of Claims 10 to 15, **characterized in that** the milling body (34) is configured to be pivotable through 180°.

## Revendications

1. Procédé de fabrication de barreaux profilés servant d'éléments métalliques de guidage en combinant successivement un façonnage à chaud et un traitement d'enlèvement de matière et dans lequel au cours de l'étape de façonnage à chaud, un pré-profilé dont la répartition des masses dans la section transversale est adaptée à l'étape de traitement par enlèvement de matière est formé de telle sorte qu'au cours de l'étape de traitement par enlèvement de matière, d'étroites tolérances dimensionnelles soient établies par enlèvement partiel de matière dans la partie fonctionnelle des barreaux profilés,
**caractérisé en ce que**
une opération de fraisage par un corps de fraise (34) dont la position est régulée et dont les disques de fraisage présentent un grand diamètre (36, 41, 42) est exécutée lors du traitement par enlèvement de matière et
**en ce que** l'écoulement de matière à l'intérieur de l'installation (1) de fraisage à haute capacité s'effectue de manière autonome à l'aide d'un étage intégré d'empilage (18) constitué d'un manipulateur (12) situé du côté de l'amenée, disposé en amont du niveau de fraisage (15) dans l'écoulement de matière et doté d'un poste de retournement (53), et d'un manipulateur (13) situé côté sortie, disposé en aval du niveau de fraisage (15) dans l'écoulement de matière et doté d'un poste de retournement (54), les deux manipulateurs (12, 13) étant configurés pour transporter les barreaux profilés en direction du niveau de fraisage (15) et les deux postes de retournement (53, 54) étant configurés pour tourner les barreaux profilés au moins autour de leur axe longitudinal horizontal.

2. Procédé selon la revendication 1, **caractérisé en ce que** les barreaux profilés à fraiser sont présentés à l'installation sous la forme de paquets de profilés empilés et **en ce que** le manipulateur (12) situé du côté amenée prélève avec l'assistance de capteurs un long barreau profilé ou simultanément plusieurs courts barreaux profilés dans le paquet de profilés empilés et le ou les transporte en direction du niveau de fraisage (15).

3. Procédé selon l'une des revendications 1 ou 2, **caractérisé en ce que** les barreaux profilés fraisés sont de nouveau empilés en un paquet de profilés avec l'assistance de détecteurs par le manipulateur (13) situé côté sortie dans la zone de dépôt (20).

4. Procédé selon l'une des revendications 1 à 3, **caractérisé en ce que** pour tous les barreaux profilés, toutes les fonctions de prélèvement dans les piles, de manipulation, de retournement et d'empilement se déroulent sous la commande d'un programme et de manière automatique.

5. Procédé selon l'une des revendications 1 à 4, **caractérisé en ce qu'**en plus d'un fonctionnement automatique, il permet également un fonctionnement sur des barreaux profilés séparés qui sont présentés à l'installation de fraisage à haute capacité à un niveau (E1-E1).

6. Procédé selon l'une des revendications 1 à 5, **caractérisé en ce que** les barreaux profilés apportés par les manipulateurs (12, 13) au niveau de fraisage (15) sont serrés en une position fixe correspondant au fraisage par la coopération d'éléments horizontaux de serrage (7, 8) et d'éléments verticaux de serrage (9), la position effective ainsi prise par les barreaux profilés étant saisie par un dispositif horizontal (59) de mesure de distance et un enregistreur de mesure (30).

7. Procédé selon l'une des revendications 1 à 6, **caractérisé en ce que** la position mesurée du contour du barreau profilé est utilisée pour le positionnement du corps de fraisage (34), de telle sorte que l'enlèvement horizontal et l'enlèvement vertical de matière au cours de l'opération de fraisage conduisent aux dimensions de consigne souhaitées de la chambre profilée du barreau profilé.

8. Procédé selon l'une des revendications 1 à 7, **caractérisé en ce qu'**une seule passe de fraisage est exécutée.

9. Procédé selon l'une des revendications 1 à 8, **caractérisé en ce que** les surfaces d'avancement des barreaux profilés sont durcies après le traitement d'enlèvement de matière.

10. Installation de fraisage à haute capacité en vue de l'exécution du traitement d'enlèvement de matière du procédé selon la revendication 1,
**caractérisée en ce que**
pour le traitement d'enlèvement de matière de barreaux profilés façonnés à chaud, l'installation (1) de fraisage à haute capacité présente un corps de fraisage (34) à position régulée, disposé à un niveau de fraisage (15) et doté de disques de fraisage (36, 41, 42) de grand diamètre, et un dispositif d'empilement (18) constitué d'un manipulateur (12) disposé du côté de l'amenée en amont du niveau de fraisage (15) dans l'écoulement de matière et doté d'un poste de retournement (53) ainsi que d'un manipulateur (13) disposé du côté de la sortie en aval du niveau de fraisage (15) dans l'écoulement de matière et doté d'un poste de retournement (54), les deux manipulateurs (12, 13) étant configurés pour transporter les barreaux profilés en direction du niveau de fraisage (15) et les deux postes de retournement (53, 54) étant configurés pour tourner les barreaux profilés au moins autour de leur axe longitudinal horizontal.

11. Installation de fraisage à haute capacité selon la revendication 10, **caractérisée en ce que** le corps de fraisage (34) possède un diamètre d'au moins 600 mm.

12. Installation de fraisage à haute capacité selon l'une des revendications 10 ou 11, **caractérisée en ce que** le corps de fraisage (34) est doté d'un dispositif aval (25) de débarbage et de façonnage final.

13. Installation de fraisage à haute capacité selon l'une des revendications 10 à 12, **caractérisée en ce que** le corps de fraisage (34) est constitué de disques de fraisage (36, 41, 42) aptes à être ajustés les uns par rapport aux autres.

14. Installation de fraisage à haute capacité selon la revendication 13, **caractérisée en ce que** les disques de fraisage (36, 41, 42) sont disposés sur un arbre d'entraînement (35) commun ou sur des arbres d'entraînement (51) distincts.

15. Installation de fraisage à haute capacité selon l'une des revendications 10 à 14, **caractérisée en ce qu'**un deuxième niveau de fraisage (15) destiné à traiter les barreaux profilés en va-et-vient par le corps de fraisage (34) est disposé parallèlement au niveau présent de fraisage (15).

16. Installation de fraisage à haute capacité selon l'une des revendications 10 à 15, **caractérisée en ce que** le corps de fraisage (34) est réalisé de manière à pouvoir pivoter sur 180°.
